(19) Europäisches Patentamt
European Patent Office
Office européen des brevets

(11) **EP 2 050 977 A2**

(12) **EUROPÄISCHE PATENTANMELDUNG**

(43) Veröffentlichungstag:
**22.04.2009 Patentblatt 2009/17**

(51) Int Cl.:
***F16D 47/04*** *(2006.01)*

(21) Anmeldenummer: **08165890.8**

(22) Anmeldetag: **06.10.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **20.10.2007 DE 102007050198**
**12.09.2008 DE 102008042029**

(71) Anmelder: **ZF Friedrichshafen AG**
**88038 Friedrichshafen (DE)**

(72) Erfinder: **Wittholz, Jan**
**97506 Grafenrheinfeld (DE)**

(54) **Drehmomentbegrenzungsvorrichtung**

(57) Die Erfindung betrifft eine Drehmomentbegrenzungsvorrichtung (1) für einen Antriebsstrang (2), insbesondere für den Antriebsstrang eines Kraftfahrzeugs, die mindestens zwei parallel geschaltete Reibkupplungselemente (3, 4, 5) aufweist, die zwischen einer Antriebswelle (6) und einer Abtriebswelle (7) wirken, wobei jedes Reibkupplungselement (3, 4, 5) eine Kupplungsscheibe (8, 9, 10) aufweist, die zwischen der Antriebswelle (6) und der Abtriebswelle (7) wirksam ist. Um auf kleinem Bauraum unterschiedliche Rutschmomente in beiden Drehrichtungen zu erzielen, sieht die Erfindung vor, dass zwischen mindestens einer Kupplungsscheibe (10) und der Antriebswelle (6) oder der Abtriebswelle (7) ein in eine Drehrichtung wirksamer Freilauf (11) angeordnet ist.

Fig. 1

EP 2 050 977 A2

**Beschreibung**

Die Erfindung betrifft eine Drehmomentbegrenzungsvorrichtung für einen Antriebsstrang, insbesondere für den Antriebsstrang eines Kraftfahrzeugs, die mindestens zwei parallel geschaltete Reibkupplungselemente aufweist, die zwischen einer Antriebswelle und einer Abtriebswelle wirken, wobei jedes Reibkupplungselement eine Kupplungsscheibe aufweist, die zwischen der Antriebswelle und der Abtriebswelle wirksam ist.

Der Antriebsstrang eines Fahrzeugs wird im Betrieb mit Lastspitzen beaufschlagt, die nicht nur vom Antriebsmotor, sondern vor allem von der Straße herrühren. So wird beispielsweise in Antriebssträngen von Rallye-Fahrzeugen beobachtet, dass sich erhebliche Drehmomentspitzen ergeben. Dies wird durch Unregelmäßigkeiten des Untergrunds bedingt, vor allem beim Landen nach Sprüngen. Die Drehmomentspitzen sind häufig höher als die Drehmomente, die durch die Antriebsmaschine selber erzeugt werden. Nach den möglicherweise auftretenden Drehmomentspitzen muss der Antriebsstrang dimensioniert werden. Die auftretenden Momentspitzen bestimmen dann auch die Lebensdauer des Antriebsstranges.

Es ist daher bekannt, gegen zu hohe Drehmomentbeanspruchungen des Antriebsstranges Vorkehrungen zu treffen.

Nach einer vorbekannten Lösung wird in den Antriebsstrang eine Reibkupplung integriert, die als Drehmomentbegrenzungsvorrichtung fungiert. Die Kupplung kann betätigbar oder stets geschlossen ausgeführt sein. Über die Kupplung kann das Antriebsmoment des Motors sicher übertragen werden. Bei zu hohen Drehmomentspitzen rutscht die Kupplung indes durch, so dass eine übergroße Drehmomentbeaufschlagung des Antriebsstranges verhindert wird.

Insbesondere für Motorräder sind sog. Anti-Hopping-Kupplungen bekannt. Eine Anti-Hopping-Kupplung ermöglicht das übergangslose Herunterschalten des Getriebes (beispielsweise vor einer Kurve) ohne das Blockieren des Hinterrades (sog. Hinterradstempeln). Sobald das Hinterrad zum Stehen kommt, löst die Anti-Hopping-Kupplung aus, so dass es nicht zum Blockieren kommt. Bewerkstelligt wird dies durch einen Rampenmechanismus, der die Anpresskraft auf die Reibbeläge einer Kupplung in Schubrichtung reduziert, so dass die Kupplung mit einem definierten Schleppmoment durchrutscht.

Bei den zuerst genannten Drehmomentbegrenzungsvorrichtungen werden in Zug-und in Schubrichtung nachteilig gleich große Drehmomente übertragen, obwohl in Schubrichtung niedrigere Momente ausreichen würden und auch angestrebt sind. Allerdings soll andererseits das übertragbare Schubmoment auch größer als Null sein, um die Funktion der Motorbremse nutzen zu können.

Die genannten Anti-Hopping-Mechanismen haben den Nachteil, dass sie relativ aufwändig aufgebaut und schwierig auszulegen sind, da das gesamte Drehmoment über die Rampen laufen muss. Daher eignen sich diese Art von Mechanismen meist nur für Motorräder.

Der Erfindung liegt daher die **Aufgabe** zugrunde, eine Drehmomentbegrenzungsvorrichtung der eingangs genannten Art so fortzubilden, dass es möglich ist, in den beiden Drehrichtungen unterschiedlich große Rutschmomente zu erhalten, wobei dies mit einem einfachen und kostengünstigen Aufbau erzielt werden soll. Weiterhin soll nur ein möglichst geringer Bauraum hierfür erforderlich sein.

Die **Lösung** dieser Aufgabe durch die Erfindung ist dadurch gekennzeichnet, dass zwischen mindestens einer Kupplungsscheibe und der Antriebswelle oder der Abtriebswelle der Drehmomentbegrenzungsvorrichtung ein in eine Drehrichtung wirksamer Freilauf angeordnet ist.

Durch den mindestens einen Freilauf wird erreicht, dass das übertragbare Rutschmoment in der einen Drehrichtung größer ist als in der anderen Drehrichtung. In der Drehrichtung, in der der Freilauf wirksam ist, wird über die jeweilige Kupplungsscheibe nämlich gar kein Drehmoment übertragen, so dass hierdurch in einfacher Weise die zugrunde liegende Aufgabe gelöst wird.

Der Freilauf kann als Rollenfreilauf oder als Klemmkörperfreilauf ausgebildet sein.

Die Drehmomentbegrenzungsvorrichtung kann im Kraftfluss zwischen einem Motor, insbesondere einem Verbrennungsmotor, und einem Getriebe angeordnet werden. In diesem Falle sieht eine Weiterbildung vor, dass der mindestens eine Freilauf zwischen einer Kupplungsscheibe und der Getriebeeingangswelle wirksam ist.

Die Drehmomentbegrenzungsvorrichtung hat nach einer bevorzugten Ausgestaltung zwei oder mehr parallel geschaltete Reibkupplungselemente, wobei die Kupplungsscheibe eines oder mehrerer Reibkupplungselemente mit dem Freilauf versehen ist. In diesem Falle wird erreicht, dass das zu übertragende maximale Rutschmoment in der einen Drehrichtung ca. 67 % des Drehmoments in der anderen Drehrichtung beträgt.

Dies ist allerdings nur dann der Fall, wenn - wie es eine Fortbildung vorsieht - die Kupplungsscheiben aller Reibkupplungselemente gleich dimensioniert sind.

Die Drehmomentbegrenzungsvorrichtung hat bevorzugt ein Gehäuse, wobei der Freilauf von der Getriebeseite aus in seinen Sitz eingepresst ist.

Die vorgeschlagene Drehmomentbegrenzungsvorrichtung ist bevorzugt Bestandteil des Antriebsstrangs eines PKW, besonders bevorzugt Bestandteil des Antriebsstrangs eines Rallye-Fahrzeugs.

Da es insbesondere im Motorsport Standard ist, dass die Rutschkupplung zur Drehmomentbegrenzung mehrere Reibscheiben hat, bietet sich das Erfindungskonzept an, um die gewünschte Drehmomentbegrenzung in den beiden Drehrichtungen (Zug- und Schubbetrieb) mit unterschiedlichen Rutsch-Drehmomenten herzustellen.

Ein Teil der Reibscheiben werden dabei direkt mit der Getriebeeingangswelle drehfest verbunden, ein anderer Teil nur indirekt über den Freilauf.

Damit reduziert sich in Schubrichtung das übertragbare Drehmoment im Verhältnis

$$V = \text{(Anzahl der drehfesten Reibscheiben)} / \text{(Gesamtanzahl der Reibscheiben)}.$$

Der gewünschte vorteilhafte Effekt der Momentenreduzierung tritt somit nur im Schubbetrieb auf. Im Zugbetrieb überträgt die Kupplungseinheit Drehmomente bis zum Rutschmoment, wie bislang üblich. Die damit in Schubrichtung nur noch in geringerem Umfang übertragbaren Drehmomente schützen somit den Antriebsstrang vor Einflüssen aus extremen Fahrzuständen. Der Antriebsstrang wird somit vor hohen Überlasten zuverlässig geschützt. Dies erlaubt eine schwächere Dimensionierung des Antriebsstrangs mit damit einhergehenden entsprechenden Vorteilen.

Der vorgesehene mindestens eine Freilauf ist ein preiswertes und bewährtes Bauteil, das sehr viel einfacher aufgebaut ist als ein Anti-Hopping-Mechanismus.

In der Zeichnung sind Ausführungsbeispiele der Erfindung dargestellt. Es zeigen:

Fig. 1    schematisch dargestellt den Antriebsstrang eines PKW, wobei nur die Drehmomentbegrenzungsvorrichtung näher dargestellt ist,

Fig. 2    die Drehmomentbegrenzungsvorrichtung des Antriebsstranges gemäß Fig. 1 im Radialschnitt und in detaillierterer Darstellung,

Fig. 3    den Axialschnitt eines Teils eines als Rollenfreilauf ausgebildeten Freilaufs und

Fig.4    den Axialschnitt eines Teils eines als Klemmkörperfreilauf ausgebildeten Freilaufs.

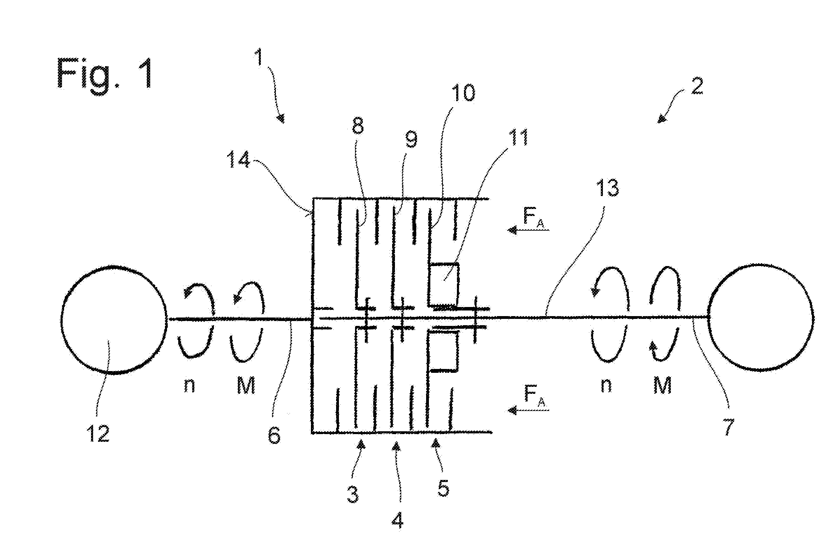

In Fig. 1 ist ein Antriebsstrang 2 schematisch dargestellt, der einen Motor 12 aufweist, der über eine Antriebswelle 6 mit einer Drehmomentbegrenzungsvorrichtung 1 drehfest verbunden ist. Die Drehmomentbegrenzungsvorrichtung 1 ihrerseits steht mit einer Abtriebswelle 7 in drehfester Verbindung, die zum verbleibenden Teil des Antriebsstrangs 2 führt. Wie angedeutet ist, überträgt der Motor 12 eine Leistung auf den Antriebsstrang 2, d. h. ein definiertes Drehmoment M bei gewisser Drehzahl n.

Damit sowohl vom Motor 12 zum Rest des Antriebsstrangs 2 nur ein limitiertes Drehmoment übertragen werden kann, als auch - vor allem - vom Antriebsstrang her nur ein begrenztes Drehmoment in Richtung Motor 12 übertragbar ist, ist die Drehmomentbegrenzungsvorrichtung 1 vorgesehen. Kommt es nach einem Sprung eines Rallye-Fahrzeugs zu stoßartigem Bodenkontakt, wird das hieraus resultierende immense Drehmoment nicht vollständig auf den Motor 12 übertragen. Vielmehr veranlasst die Drehmomentbegrenzungsvorrichtung eine Begrenzung des maximal übertragbaren Drehmoments M durch den Antriebsstrang.

Dabei soll der Maximalwert des Drehmoments im Zugbetrieb größer sein als im Schubbetrieb. Dies wird wie folgt in einfacher, kostengünstiger und platzsparender Weise bewerkstelligt.

Die Drehmomentbegrenzungsvorrichtung 1 weist drei parallel geschaltete Reibkupplungselemente 3, 4 und 5 auf. Sie bestehen jeweils aus einer Reibungskupplung, die je eine Kupplungsscheibe 8, 9, 10 aufweist. Jede Kupplungsscheibe 8, 9, 10 hat Reibbeläge 15, so dass im Falle dessen, dass - wie es in Fig. 1 angedeutet ist - die Drehmomentbegrenzungsvorrichtung 1 mit einer axial gerichteten Anpresskraft $F_A$ beaufschlagt wird, jede Kupplungsscheibe 8, 9, 10 ein Teil des Drehmoments überträgt, und zwar zwischen dem drehfest mit dem Motor 12 verbundenen Gehäuse 14 und einer Getriebeeingangswelle 13 des sich hinter der Drehmomentbegrenzungsvorrichtung 1 anschließenden Getriebes.

Erfindungswesentlich ist, dass zwischen mindestens einer der Kupplungsscheiben 8, 9, 10 und der Antriebswelle 6 oder der Abtriebswelle 7 ein in eine Drehrichtung wirksamer Freilauf 11 angeordnet ist.

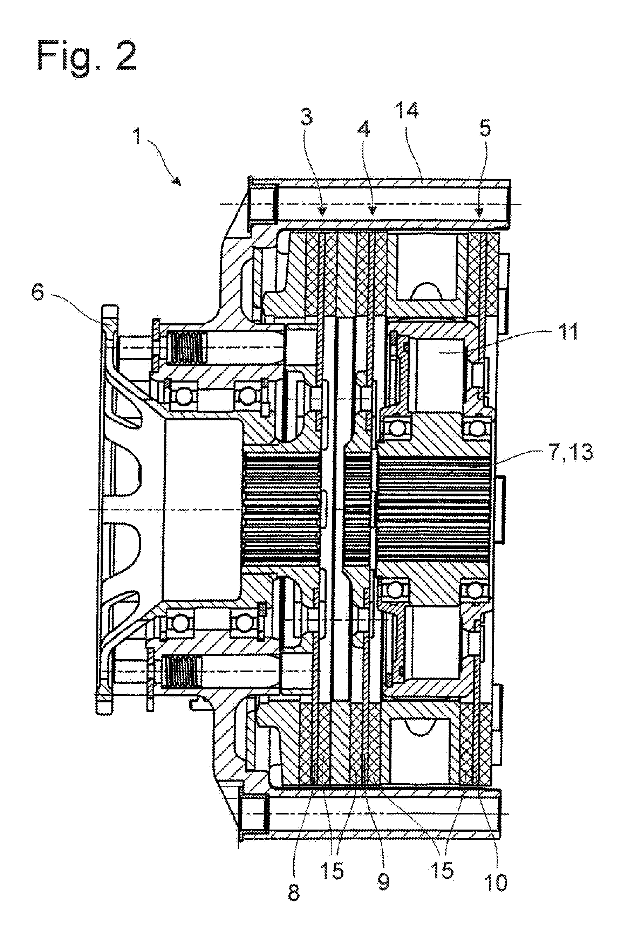

Dies hat im Ausführungsbeispiel gemäß Fig. 1 und 2 zur Folge, dass im Zugbetrieb, in der der Freilauf 11 sperrt, alle drei Kupplungsscheiben 8, 9, 10 ein Drehmoment vom Motor 12 auf den Rest des Antriebsstrangs übertragen.

Im Schubbetrieb hingegen kommt der Freilauf 11, der zwischen der Kupplungsscheibe 10 und der Getriebeeingangswelle 13 wirkt, zum Tragen, d. h. er lässt keine Drehmomentübertragung von der Getriebeeingangswelle 13 auf den Motor 12 zu. Nur die beiden Kupplungsscheiben 8 und 9 können ein Drehmoment übertragen.

Demgemäß liegt das Drehmoment, das im Schubbetrieb übertragbar ist, nur bei

$$V = 2/3 = \text{ca. } 67\%$$

des Wertes im Zugbetrieb. Es sei folgendes Beispiel genannt:

Pro Kupplungsscheibe 8, 9, 10 kann ein Drehmoment von maximal 300 Nm übertragen werden, bevor die Kupplungsscheiben durchrutschten. Bei der vorliegenden Ausgestaltung gemäß Fig. 1 und 2 bedeutet dies, dass im Zugbetrieb alle drei Kupplungsscheiben 8, 9, 10 - bei klemmendem Freilauf 11 - ein Drehmoment übertragen können, so dass insgesamt ein Drehmoment von

$$M = 3 \times 300\,\text{Nm} = 900\,\text{Nm}$$

übertragbar ist.

Im Schubbetrieb läuft der Freilauf 11 indes frei, so dass nur die beiden Kupplungsscheiben 8 und 9 ihr Drehmoment übertragen können, so dass jetzt nur ein Drehmoment in Höhe von

$$M = 2 \times 300\,\text{Nm} = 600\,\text{Nm}$$

übertragen werden kann.

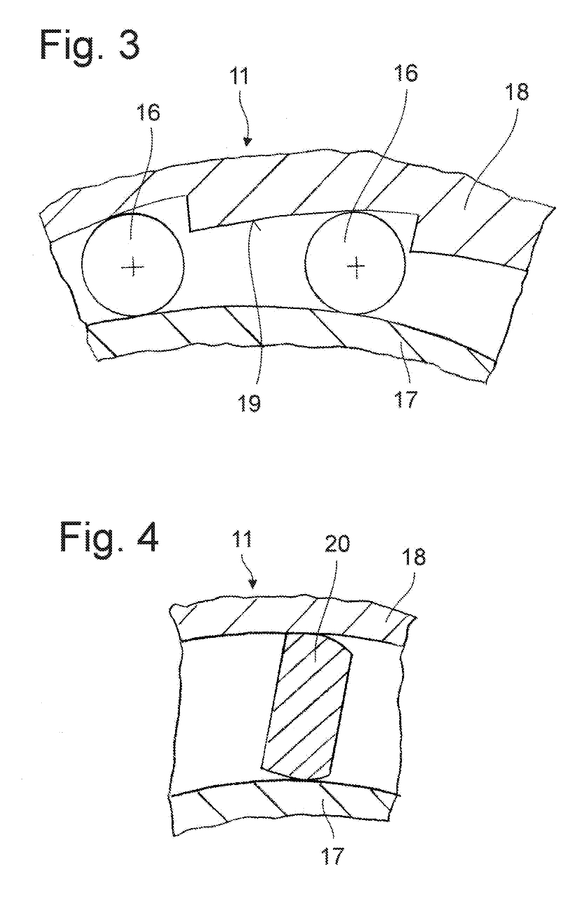

In den Figuren 3 und 4 sind an sich bekannte Freiläufe 11 im Axialschnitt ausschnittsweise dargestellt. Fig. 3 zeigt einen Rollenfreilauf, der Rollen 16 aufweist, die zwischen einem Innenring 17 und einem Außenring 18 angeordnet sind. Rampenförmige Abschnitte 19 sorgen dafür, dass die ungehinderte Relativdrehung zwischen Innenring und Außenring zwar in eine Drehrichtung möglich ist, dass jedoch bei Drehrichtungsumkehr die Rollen 16 durch die Rampen 19 geklemmt werden, so dass keine Relativdrehung stattfinden kann.

Analog arbeitet der Klemmkörperfreilauf 11, der in Fig. 4 skizziert ist. Eine Anzahl Klemmkörper 20 sind über den Umfang so angeordnet, dass nur in eine Drehrichtung eine Sperrung, in der anderen indes Freilauf vorliegt.

Eine bevorzugte Ausführungsform sieht vor, dass der Freilauf 11 von der Getriebeseite her in das Gehäuse 14 der Vorrichtung 2 eingepresst ist.

Die Drehmomentbegrenzungsvorrichtung 1 fungiert also als Rutschkupplung zur Überlastsicherung und hält übermäßig große Drehmomentspitzen vom Antriebsstrang fern.

Bezugszeichenliste

| 1  | Drehmomentbegrenzungsvorrichtung |
|----|----------------------------------|
| 2  | Antriebsstrang |
| 3  | Reibkupplungselement |
| 4  | Reibkupplungselement |
| 5  | Reibkupplungselement |
| 6  | Antriebswelle |
| 7  | Abtriebswelle |
| 8  | Kupplungsscheibe |
| 9  | Kupplungsscheibe |
| 10 | Kupplungsscheibe |
| 11 | Freilauf |
| 12 | Motor |
| 13 | Getriebeeingangswelle |

14    Gehäuse
15    Reibbelag
16    Rolle
17    Innenring
18    Außenring
19    Rampe
20    Klemmkörper
$F_A$    Anpresskraft
n    Drehzahl
M    Drehmoment

**Patentansprüche**

1.  Drehmomentbegrenzungsvorrichtung (1) für einen Antriebsstrang (2), insbesondere für den Antriebsstrang eines Kraftfahrzeugs, die mindestens zwei parallel geschaltete Reibkupplungselemente (3, 4, 5) aufweist, die zwischen einer Antriebswelle (6) und einer Abtriebswelle (7) wirken, wobei jedes Reibkupplungselement (3, 4, 5) eine Kupplungsscheibe (8, 9, 10) aufweist, die zwischen der Antriebswelle (6) und der Abtriebswelle (7) wirksam ist, **dadurch gekennzeichnet,**
    **dass** zwischen mindestens einer Kupplungsscheibe (10) und der Antriebswelle (6) oder der Abtriebswelle (7) ein in eine Drehrichtung wirksamer Freilauf (11) angeordnet ist.

2.  Drehmomentbegrenzungsvorrichtung nach Anspruch 1, **dadurch gekennzeichnet, dass** der Freilauf (11) als Rollenfreilauf ausgebildet ist.

3.  Drehmomentbegrenzungsvorrichtung nach Anspruch 1, **dadurch gekennzeichnet, dass** der Freilauf (11) als Klemmkörperfreilauf ausgebildet ist.

4.  Drehmomentbegrenzungsvorrichtung nach einem der Ansprüche 1 bis 3, **dadurch gekennzeichnet, dass** sie im Kraftfluss zwischen einem Motor (12) und einem Getriebe angeordnet ist.

5.  Drehmomentbegrenzungsvorrichtung nach Anspruch 4, **dadurch gekennzeichnet, dass** der mindestens eine Freilauf (11) zwischen einer Kupplungsscheibe (10) und der Getriebeeingangswelle (13) wirksam ist.

6.  Drehmomentbegrenzungsvorrichtung nach einem der Ansprüche 1 bis 5, **dadurch gekennzeichnet, dass** sie zwei oder mehr parallel geschaltete Reibkupplungselemente (3, 4, 5) aufweist, wobei die Kupplungsscheibe (10) eines oder mehrerer Reibkupplungselemente (5) mit dem Freilauf (11) versehen ist.

7.  Drehmomentbegrenzungsvorrichtung nach einem der Ansprüche 1 bis 6, **dadurch gekennzeichnet, dass** die Kupplungsscheiben (8, 9, 10) aller Reibkupplungselemente (3, 4, 5) gleich dimensioniert sind.

8.  Drehmomentbegrenzungsvorrichtung nach einem der Ansprüche 5 bis 7, **dadurch gekennzeichnet, dass** sie ein Gehäuse (14) aufweist, wobei der Freilauf (11) von der Getriebeseite aus in seinen Sitz eingepresst ist.

9.  Drehmomentbegrenzungsvorrichtung nach einem der Ansprüche 1 bis 8, **dadurch gekennzeichnet, dass** sie Bestandteil des Antriebsstrangs eines PKW ist.

10. Drehmomentbegrenzungsvorrichtung nach einem der Ansprüche 1 bis 8, **dadurch gekennzeichnet, dass** sie Bestandteil des Antriebsstrangs eines Rallye-Fahrzeugs ist.

Fig. 1

# Fig. 2

# Fig. 3

# Fig. 4